Europäisches Patentamt

European Patent Office

Office européen des brevets

(11) Publication number: **0 355 468 B1**

# EUROPEAN PATENT SPECIFICATION

(45) Date of publication of patent specification: **20.10.93**

(51) Int. Cl.⁵: **B42C 9/00**, C09J 193/04, C09J 157/00, //(C09J193/04, 153:02,191:00),(C09J157/00, 153:02,191:00)

(21) Application number: **89113892.7**

(22) Date of filing: **27.07.89**

(54) **Toughened hot melt adhesive composition for book lining.**

(30) Priority: **17.08.88 US 233172**

(43) Date of publication of application:
**28.02.90 Bulletin 90/09**

(45) Publication of the grant of the patent:
**20.10.93 Bulletin 93/42**

(84) Designated Contracting States:
**DE FR GB IT NL SE**

(56) References cited:
**EP-A- 0 235 516**
**US-A- 3 950 291**

(73) Proprietor: **National Starch and Chemical Investment Holding Corporation**
**501 Silverside Road**
**Wilmington, Delaware 19809(US)**

(72) Inventor: **Flanagan, Thomas P.**
**236 Piazza di Luna**
**Venice Florida 34285(US)**

(74) Representative: **Hagemann, Heinrich, Dr. et al**
**Patentanwälte**
**Hagemann & Kehl**
**Postfach 860329**
**D-81630 München (DE)**

## Description

The present invention is directed to toughened pressure sensitive hot melt adhesives used as lining adhesives in the production of hard bound books.

"Hard bound" books conventionally consist of two main components: the case and the body. The case comprises the front and back covers connected by the spine. The body of the book, also known as the "block", is comprised of a plurality of paper sheets or "leaves" which are generally sewn together along their center folds in groups to form the sections or "signatures" of the book. The signatures are then assembled to form the body of the book. At the front and back of the body are affixed heavy folded pages, "end papers", which facilitate the attachment or "casing-in" of the body to the case.

Alternatively, the book block may be formed using a "perfect binding" technique. In this operation, the pages are printed in long, continuous sheets or webs which are cut, folded and properly arranged to form a series of stacks, referred to as signatures, which are then fed into a continuous, revolving chain equipped with clamps. The free edges of the clamped sheets are first cut to remove the signature folds and then roughed so as to expose a maximum amount of fibers at the edges of the sheets and to make them more receptive to the adhesive composition. A layer or coat of a hot melt adhesive composition is then applied in molten form by means of a suitable applicator, after which the combined end papers are applied before the molten adhesive sets to form the spine of the book. A third procedure for the production of the book block involves the burst, perforate or notched method where the book block maintains the signature fold but contains burst, perforations or notches into the innermost page of the signature and wherein the adhesive is applied to the burst, perforate or notched signature to form the book block.

After the block is formed, the next step in the manufacture of books is rounding and backing if the book is intended to have a curved or rounded configuration. After the rounding, a reinforcing material called a "super" or "crash" is applied to the spine. This is done by gluing the center of the guaze-like scrim "super" or "crash" to the book block or spine. The ends of the scrim extend about 2.22 cm (7/8 inch) along the outside of the end papers on either side of the body. After the scrim or super is applied, a second coat of adhesive is typically applied and a kraft strip, with optional headband, is applied. In some operations, sufficient adhesive is applied in the gluing of the scrim to penetrate the scrim and, in these cases, the second adhesive coating step is not required. The kraft backing applied in registered relation to the book spine, the optional headbands and the scrim combine to form the conventional lining for the book.

The lined book block is then inserted into the case so the folds in the end papers are adjacent the spine of the case. Adhesive is applied to the front and back end papers adjacent the inside of the covers of the case. The end papers are pasted to the inside of the covers, enclosing the crash. The case and body are then passed through a "building in" operation to form the groove at the either edge of the case spine or placed in a press. When the attachment process, termed "casing-in" is complete, the "body" is bound to the cover incorporating a hinge so that the covers and leaves are movable with respect to each other.

Since there is no direct attachment of the book spine to the cover, it will be recognized that the lining operation and the materials used therein are critical to the production of a satisfactory book. Specifically, the adhesive(s) used to attach the scrim and kraft liners must be sufficiently low in viscosity (e.g. 500 to 5000 mPa.s (500 to 5000 cps) at 176.67°C (350°F)) to facilitate application; they must not bleed through the kraft; they must exhibit superior adhesive and cohesive strength; the films formed therefrom must be flexible to allow for easy opening even at low temperatures so as to resist "cold cracks" and yet must not flow or creep at room temperature or at elevated temperatures.

Non-pressure sensitive hot melt adhesives have recently replaced animal glues in these applications but these adhesives are deficient with respect to their open time. This lack of open time creates a serious problem in the automated book binding process where interruptions, slow downs and even shut downs of the manufacturing line result in loss of agressive tack properties with the subsequent need to discard large quantities of partially completed products. Another problem consequent with many of the hot melt adhesives presently used for this application is their high level of rigidity when solidified, resulting in a stiff backbone which is not desired for an "easy opening" book.

EP-A-0 235 561 discloses hard bound books, wherein the lining adhesive is a hot melt pressure sensitive adhesive composition comprising a) 20 to 35% by weight of an A-B-A block or A-B-A-B-A-B mulit-block copolymer where the A component is styrene and the B component is butadiene or hydrogenated butadiene and the copolymer contains at least 28 parts styrene per 100 parts copolymer; b) 45 to 70% by weight of a compatible tackifying resin; c) 5 to 30% by weight of a plasticizing oil; d) 0 to 5% by weight of a petroleum derived wax; and e) 0.1 to 2% by weight of a stabilizer.

We have now found that toughened pressure sensitive hot melt compositions prepared from specific substantially radial styrene-butadiene block copolymer, the copolymer having a styrene content greater than about 35% by weight, a modulus at 300% elongation of at least 4.5 MPa and a solution viscosity less than about 1000 mPa.s (1000 cps) are particularly useful as lining adhesives in the production of hard bound books.

Thus, the present invention is directed to a process for lining hard bound book blocks comprising the steps of: applying a molten film of a hot melt pressure sensitive adhesive to the bound edges of the book block; applying thereto a scrim; applying a second molten film of a hot melt pressure sensitive adhesive and affixing thereto a strip of kraft paper in registered relation to the book spine; wherein the pressure sensitive hot melt adhesive composition comprises:

a) 10 to 40% by weight of a substantially radial styrene-butadiene block copolymer, the copolymer having a styrene content greater than about 35% by weight, a modulus at 300% elongation of at least 4.5 MPa and a solution viscosity less than about 1000 mPa.s (1000 cps);

b) 20 to 65% by weight of a compatible tackifying resin;

c) 0.1 to 4% by weight stabilizer; and

d) the remainder, up to 60% by weight, comprising a plasticizing oil.

The spine of the resultant lined book remains flexible and produces an easy opening book.

The block copolymers useful herein are comprised of styrene and butadiene blocks arranged in a substantially radial configuration and contain at least 35%, and generally up to about 50%, by weight of the styrene moiety. Of greater significance however, the copolymers selected should exhibit a modulus at 300% elongation of at least about 4.5 MPa and a solution viscosity less than about 1000 mPa.s (1000 cps) (25% in toluene at 23°C using a Brookfield viscometer). These copolymers may be prepared using methods taught, for example, in US-A-3,239,478; 3,427,269; 3,700,633; 3,753,936 and 3,932,327. Alternatively they are available from Shell Chemical Co. under the trademark Kraton DX1122 (37% styrene, modulus of 4.8 MPa, viscosity 670 mPa.s (670 cps) and from Eni Chem Americas (Agip USA Inc.) as Europrene SOL T 162LW/1 (40% styrene, modulus of 5.0 MPa, viscosity 750 mPa.s (750 cps)) or SOl T 162 LW/2 (40% styrene, modulus of 4.6 MPa, viscosity (640 mPa.S (640 cps)). While the optimum amounts of the copolymer used in the adhesive will vary depending on the end use application, the copolymer will be present in the adhesive formulation at levels of 10 to 40% by weight, preferably 15 to 25% by weight.

The tackifying resins useful in the adhesive compositions can be hydrocarbon resins, hydrogenated hydrocarbon resins, synthetic polyterpenes, rosin esters, natural polyterpenes, and the like. More particularly, the useful tackifying resins include any compatible resins or mixtures thereof such as (1) natural and modified rosins such, for example, as gum rosin, wood rosin, tall oil rosin, distilled rosin, hydrogenated rosin, dimerized rosin, and polymerized rosin; (2) glycerol and pentaerythritol esters of natural and modified rosins, such, for example as the glycerol ester of pale, wood resin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natured terpenes, e.g. styrene/terpene and alpha methyl styrene/terpene; (4) polyterpene resins having a softening point, as determined by ASTM method E28-58T, of from 80 to 150°C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof such, for example, as the resin product resulting from the condensation, in an acidic medium, of a bicyclic terpene and a phenol; (6) aliphatic petroleum hydrocarbon resins having a Ball and Ring softening point of from 70 to 135°C.; the latter resins resulting from the polymerization of monomers consisting of primarily of olefins and diolefins; also included are the hydrogenated aliphatic petroleum hydrocarbon resins; (7) aromatic petroleum hydrocarbon resins and the hydrogenated derivatives thereof; and (8) alicyclic petroleum hydrocarbon resins and the hydrogenated derivatives thereof. Mixtures of two or more of the above described tackifying resins may be required for some formulations. The tackifier is used in amounts of 20 to 65% by weight.

The remainder (up to about 60% by weight) of the hot melt adhesive comprises at least one oil diluent. Suitable plasticizing or extending oils include not only the usual plasticizing oils but also olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic. The oligomers may be polypropylenes, polybutenes, hydrogenated polyisoprene, hydrogenated polybutadiene, or the like having average molecular weights between 350 and 10,000.

Among the applicable stabilizers or antioxidants included herein are high molecular weight hindered phenols and multifunctional phenols such as sulfur and phosphorous-containing phenols. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxy group. The presence of these sterically bulky substituted radicals in the vicinity of the hydroxyl group serves to retard its stretching frequency and, correspondingly, its reactivity; this steric hindrance thus providing the phenolic compound with its stabilizing properties. Representative hindered phenols include: 1,3,5-trimethyl 2,4,6-tris (3,5-di-tert-butyl-4-hydroxybenzyl)benzene; pentaerythrityl tetrakis-3(3,5-di-tert-butyl-4-hydroxyphenyl)propionate; n-octadecyl-3,5-di-tert-butyl-4-hydroxyphenol)-propionate; 4,4'-methylenebis (2,6-tert-butylphenol); 4,4'-thiobis (6-tert-butyl-o-cresol); 2,6-di-tertbutylphenol; 6-(4-hydroxyphenoxy)-2,4-bis(n-octyl-thio)-1,3,5-triazine; di-n-octadecyl 3,5-di-tert-butyl-4-hydroxy-benzylphosphonate; 2-(n-octylthio)ethyl 3,5-di-tert-butyl-4-hydroxy-benzoate; and sorbitol hexa[3-(3,5-di-tert-butyl-4-hydroxyphenyl)-propionate].The stabilizer is present in amounts of 0.1 to 4% by weight, preferably less than about 2%.

Optional additives may be incorporated into the hot melt compositions in order to modify certain properties thereof. Among these additives may be included colorants such as titanium dioxide; and fillers such as talc and clay, etc. as well as minor amounts (e.g. less than about 5%) of a petroleum derived wax.

These hot melt adhesive compositions may be formulated using techniques known in the art. An exemplary procedure involves placing approximately half of the total tackifying resin concentration in a jacketed mixing kettle, preferably in a jacketed heavy duty mixer of the Baker-Perkins or Day type, which is equipped with rotors and thereupon raising the temperature to a range of from 121.11 to 176.67°C (250° to 350°F)., the precise temperature utilized depending on the melting point of the particular tackifying resins. When the resin has melted, stirring is initiated and the block polymer and stabilizer are added together with any optional additives whose presence may be desired, the addition of the latter components being extended over a prolonged period in order to avoid the formation of lumps. Mixing and heating are continued until a smooth, homogeneous mass is obtained whereupon the remainder of the tackifying resin and the oil are thoroughly and uniformly admixed therewith. The resultant hot melt adhesives are generally produced with an oil in bulk form and packaged in release coated tube or boxes.

In the following illustrative examples all parts are given by weight and all temperatures in degrees Celsius unless otherwise noted.

EXAMPLE I

The following example illustrates the preparation of adhesives of the invention in formulations suitable for use in the bookbinding industry as discussed above.

In preparing the following samples, a heavy duty mixer which had been heated to 150°C and which was equipped with a stirring paddle was charged with half of the tackifying resin. After melting of the resins, stirring was then initiated whereupon the block copolymers and the antioxidants were added slowly. Heating and stirring were continued until a homogeneous mass was obtained whereupon the remainder of the tackifying resin and the oil were admixed therewith. The molten mixture was then poured into a siliconized paper tube and cooled to room temperature.

Adhesives were prepared from the materials and amounts shown in Table I using the general procedure described above. Viscosity measurements were determined using a Brookfield viscometer (Spindle 27) at 162.78°C (325°F). The adhesives were subjected to the following tests to determine the heat resistance of the adhesive under a constant load and static stress and elevated temperature.

The adhesive was heated to 160°C (320°F) and a lamination of kraft paper was made using heated rollers. The adhesive thickness was 1.27 mm (50 mil) and the bonds having an adhesive area of one square inch. The bonds were aged overnight at 22.22°C (72°F) and 50% RH. The peel mode samples were then hung in a 40.56°C (105°F) oven using 118 g/cm (300 gram/inch) weight. The time at which the bond failed was noted as was the mode of failure.

The tensile strength of the hot melt adhesive was determined on samples cast from the hot melts and molded in silicone rubber molds into the shape of dog bones . After cooling, the dog bone shaped specimens were removed from the mold and tested using an Instron Tensile Tester. The force required to start to stretch the specimen is recorded as the "tensile yield", the force required to break the specimen as "tensile break". This procedure also provides a measurement of percent elongation, which is the percentage stretch of the hot melt sample at the point of rupture in obtaining the ultimate tensile strength.

EP 0 355 468 B1

## TABLE I

| Sample | Polymer | Amount | Resin | Amount | Oil | Tensile Strength (MPa) Y | U | K/K (h) | Viscosity mPa.s (cps) |
|---|---|---|---|---|---|---|---|---|---|
| 1 | DX1122X | 23 | Permalyn 305[1] | 59 | 18 | 0.06 | 1.17 | 3-1/2 | 2975 |
| 2 | Sol T162 LW/1[2] | 23 | Permalyn 305 | 59 | 18 | 0.09 | 1.27 | 6-1/2 | 3365 |
| 3 | Stereon 840A | 23 | Permalyn 305 | 59 | 18 | 0.04 | 0.59 | 3-1/2 | 2915 |
| 4 | DX1122X | 23 | Permalyn 305 | 57 | 20 | 0.05 | 1.16 | 5-1/2 | 2950 |
| 5 | Firestone SR 7360[3] | 23 | Permalyn 305 | 57 | 20 | 0.04 | 0.86 | 2-1/2 | 2525 |
| 6 | DX1122X | 21 | ECR 149B[4] | 60 | 19 | 0.05 | 1.17 | 2 | 2400 |
| 7 | Sol T162 LW/2 | 21 | ECR 149B | 60 | 19 | 0.07 | 1.27 | 2-3/4 | 2420 |
| 8 | Stereon 840A | 21 | ECR 149B | 60 | 19 | 0.04 | 0.62 | 3-1/2 | 2470 |
| 9 | DX1122X | 15 | ECR 149A[5] / ECR 149B | 30 / 30 | 25 | 0.03 | 0.82 | 1 | 760 |
| 10 | Stereon 840A | 21 | ECR 149A / ECR 149B | 30 / 30 | 19 | 0.05 | 0.72 | 5-1/3 | 2630 |
| 11 | Stereon 840A | 15 | ECR 149A / ECR 149B | 30 / 30 | 25 | 0.02 | 0.38 | 1-2/3 | 685 |
| 12 | DX1122X | 21 | ECR 149A / ECR 149B | 30 / 30 | 19 | 0.07 | 1.3 | 7-1/4 | 3010 |
| 13 | DX1122X | 15 | Kristalex[6] / ECR 149B | 8 / 52 | 25 | 0.04 | 1.14 | 8-3/4 | 570 |
| 14 | Sol T162 LW/2 | 15 | Kristalex / ECR 149B | 8 / 52 | 25 | 0.04 | 1.22 | 6-1/4 | 805 |
| 15 | Firestone SR 7360 | 15 | Kristalex / ECR 149B | 8 / 52 | 25 | 0.03 | 0.73 | 3-1/4 | 765 |

TABLE I (continued)

| Sample | Polymer | Amount | Resin | Amount | Oil | Tensile Strength (MPa) Y | U | K/K (h) | Viscosity mPa.s (cps) |
|---|---|---|---|---|---|---|---|---|---|
| 16 | Stereon 840A | 15 | Kristalex ECR 149B | 8 52 | 25 | 0.03 | 0.59 | 2-1/4 | 690 |
| 17 | DX1122X | 15 | Kristalex ECR 149A | 8 52 | 25 | 0.06 | 1.24 | 25 | 1025 |
| 18 | DX1122X | 21 | M 105[7] | 60 | 19 | .06 | 1.19 | 16 | 2310 |
| 19 | SOL T162X LW/2 | 21 | M 105 | 60 | 19 | .08 | 1.39 | 16 | 2320 |
| 20 | Stereon 840A | 21 | M 105 | 60 | 19 | .04 | 0.83 | 4-1/2 | 2450 |
| 21 | Stereon 840A | 21 | Res D2105[8] | 60 | 19 | .05 | 0.91 | 20-1/2 | 2470 |
| 22 | Stereon 840A | 22.5 | Res D2105 | 60 | 17.5 | .06 | 1.06 | 40 | 2950 |
| 23 | SOL T168 | 22.5 | Res D2105 | 60 | 17.5 | .06 | 1.32 | 82 | 3535 |
| 24 | SOL T168 | 18 | Res D2105 | 60 | 22 | .02 | 0.85 | 4-1/2 | 1390 |
| 25 | DX1122X | 18 | Res D2105 | 60 | 22 | .04 | 1.14 | 32-1/3 | 935 |
| 26 | DX1122X | 15 | Res D2105 | 60 | 22*(9) | .03 | 0.98 | 8 | 600 |

(1) Permalyn 305 is a pentaerythritol ester of rosin from Hercules
(2) Stereon 840A is a styrene butadiene multi-block copolymer containing 43% styrene, having a modulus of 2.4 MPa and a solution viscosity of 650 mPa.s (650 cps.) from Firestone
(3) Firestone SR 7360 is a styrene-butadiene polymer containing 43% styrene, having a modulus at 300% elongation of 3.7 MPa and a solution viscosity of 990 mPa.s (990 cps.)
(4) ECR 149B is an aliphatic/aromatic $C_5/C_9$ resin from Exxon (95°C)
(5) ECR 149A is an aliphatic/aromatic $C_5/C_9$ resin from Exxon (softening pt. 105°C)
(6) Kristalex 5140 is an alpha methyl styrene resin from Hercules (140°C)
(7) M 105 is a styrenated terpene resin from Reichhold
(8) Res D2105 is a styrenated terpene resin from Hercules
(9) Also contained 3 parts ECR 143H, a liquid aliphatic tackifying resin available from Exxon

The testing results of Samples 1-8 show significantly higher ultimate tensile strength of the adhesives of the present invention when contrasted with presently commercially utilized adhesive compositions containing similar amounts of raw materials.

Sample 9 shows that it is possible to use less polymer to obtain a lower viscosity adhesive without sacrifice of tensile strength. (Compare to Sample 11 prepared with 15 parts Stereon). Note however the

6

product did suffer with respect to Kraft/Kraft adhesive and hence would not be readily useful for certain end use applications where stringent heat resistance values are required.

Samples 12, 13 and 14 show results similar to those of Sample 9, additionally overcoming the deficiency of Sample 9 with respect to heat resistance by use of a different tackifier system.

Sample 17 shows a further formulation according to the invention using a different tackifying system. Note, in particular, the high heat resistance value.

Samples 18 through 26 again show the improved heat resistance and ultimate tensile strength achieved using adhesive compositions of the invention as contrasted to conventionally employed Stereon containing adhesive systems with Samples 24, 25 and 26, also showing that lower levels of the Kraton D1122X may be used to obtain lower viscosity products without sacrifice to the tensile strength.

All of sample 1-22, on testing, gave entirely cohesive modes of failure in the Kraft to Kraft heat resistance test, i.e., adhesive residue was observed on both substrates after bond failure.

The resultant hot melt adhesives may be applied to bond the scrim and/or kraft to form the book lining using techniques and materials as are conventional in the book binding art. In this regard, it is important to note that the adhesives of the present invention are compatible with any of the book backbone surfaces onto which they may be coated and without limitation to the particular binding method employed. Thus, the book block may be bound by any of the usual procesures, including but not limited to "perfect" binding with hot melt adhesive; burst binding with emulsion adhesive and then with hot melt adhesive; sewn and glued off with emulsion adhesive; or perfect or burst bound with emulsion adhesive. Further, the hot melt pressure sensitive adhesives of the invnetion may be applied directly to the adhesive coated backbone and the scrim applied thereto or the backbone may be covered with a combined end sheet or capping strip prior to application of the scrim. Materials used for this latter purpose are conventional and often comprise a paper which has some degree of stretch associated therewith.

## Claims

1. A process for lining hard bound book blocks comprising the steps of applying a molten film of a hot melt pressure sensitive adhesive to the bound edges of the book block; applying thereto a scrim; applying a second molten film of a hot melt pressure sensitive adhesive and affixing thereto a strip of kraft paper in registered relation to the book spine; wherein the pressure sensitive hot melt adhesive composition comprises:

    a) 10 to 40% by weight of a substantially radial styrene-butadiene block copolymer, the copolymer having a styrene content greater than about 35% by weight, a modulus at 300% elongation of at least 4.5 MPa and a solution viscosity less than about 1000 mPa.s (1000 cps);

    b) 20 to 65% by weight of a compatible tackifying resin;

    c) 0.1 to 4% by weight stabilizer; and

    d) the remainder, up to 60% by weight, comprising a plasticizing oil.

2. The process of Claim 1 wherein the tackifier in the hot melt adhesive composition is any compatible resin or mixture thereof selected from the group consisting of (1) natural and modified rosins: (2) glycerol and pentaerythritol esters of natural and modified rosins; (3) copolymers and terpolymers of natural terpenes; (4) polyterpene resins having a softening point, as determined by ASTM method E28-58T, of from 80° to 150°C; (5) phenolic modified terpene resins and hydrogenated derivatives thereof; (6) aliphatic petroleum hydrocarbon resins having a Ball and Ring softening point of from 70° to 135°c.; (7) aromatic petroleum hydrocarbon resins and the hydrogenated derivatives thereof; and (8) alicyclic petroleum hydrocarbon resins and the hydrogenated derivatives thereof.

3. A book block lined by the process of Claim 1.

## Patentansprüche

1. Verfahren zum Binden hartgebundener Buchblöcke, das die Schritte umfaßt: Aufbringen eines geschmolzenen Filmes eines druckempfindlichen Heißschmelzklebstoffes zum Verbinden der Kanten des Buchblockes, Aufbringen eines Feingewebes darauf, Aufbringen eines zweiten geschmolzenen Filmes eines druckempfindlichen Heißschmelzklebstoffes und Befestigen eines Streifens von Kraftpapier in Registerbeziehung zum Buchrücken, bei welchem die druckempfindliche Heißschmelzklebstoffzusammensetzung umfaßt:

EP 0 355 468 B1

a) 10 bis 40 Gew.-% eines im wesentlichen radialen Styrol-Butadien-Blockcopolymers, das einen Styrolgehalt von mehr als etwa 35 Gew.-%, einen Modul bei 300 % Dehnung von mindestens 4,5 MPa und eine Lösungsviskosität von weniger als etwa 1000 mPa.s (1000 cps) hat,
b) 20 bis 65 Gew.-% eines kompatiblen klebrigmachenden Harzes,
c) 0,1 bis 4 Gew.-% Stabilisator und
d) wobei der Rest bis zu 60 Gew.-% ein plastifizierendes Öl umfaßt.

2. Verfahren nach Anspruch 1, bei welchem der Klebrigmacher in der Heißschmelzklebstoffzusammensetzung irgendein kompatibles Harz oder eine Mischung davon ist, ausgewählt aus der aus (1) natürlichen und modifizierten Naturharzen, (2) Glycerol- und Pentaerythritolestern von natürlichen und modifizierten Naturharzen, (3) Copolymeren und Terpolymeren von natürlichen Terpenen, (4) Polyterpenharzen mit einem Erweichungspunkt, bestimmt nach der ASTM-Methode E28-58T, von 80 bis 150°C, (5) phenolmodifizierten Terpenharzen und hydrierten Derivaten davon, (6) aliphatischen Erdölkohlenwasserstoffharzen mit einem Kugel- und Ringerweichungspunkt von 70 bis 135°C, (7) aromatischen Erdölkohlenwasserstoffharzenund hydrierten Derivaten davon und (8) alicyclischen Erdölkohlenwasserstoffharzen und hydrierten Derivaten davon bestehenden Gruppe.

3. Buchblock, gebunden nach dem Verfahren gemäß Anspruch 1.

**Revendications**

1. Procédé de revêtement de blocs de livres à reliure rigide, comprenant les étapes d'application d'un film fondu d'un adhésif thermofusible sensible à la pression aux bords réunis du bloc du livre ; d'application à ces bords d'une toile de renforcement ; d'application d'un second film fondu d'un adhésif thermofusible sensible à la pression et de fixation à ce film d'une bande de papier kraft disposée de manière à coïncider avec le dos du livre ; dans lequel la composition adhésive thermofusible sensible à la pression comprend :
   a) 10 à 40 % en poids d'un copolymère séquencé styrène-butadiène essentiellement radial, le copolymère ayant une teneur en styrène supérieure à environ 35 % en poids, un module à 300 % d'allongement d'au moins 4,5 MPa et une viscosité en solution inférieure à environ 1000 mPa.s (1000 cps) ;
   b) 20 à 65 % en poids d'une résine d'adhésivité compatible ;
   c) 0,1 à 4 % en poids d'un stabilisant ; et
   d) le reste, jusqu'à 60 % en poids, comprenant une huile plastifiante.

2. Procédé suivant la revendication 1, dans lequel l'agent d'adhésivité présent dans la composition adhésive thermofusible consiste en n'importe quelle résine compatible ou mélange de telles résines choisies dans le groupe consistant en (1) des colophanes naturelles et modifiées ; (2) des esters de glycérol et de pentaérythritol de colophanes naturelles et modifiées ; (3) des copolymères et terpolymères de terpènes naturels ; (4) des résines polyterpéniques ayant un point de ramollissement, tel qu'il est déterminé par le procédé ASTM E28-58T, de 80 à 150°C ; (5) des résines terpéniques à modification phénolique et leurs dérivés hydrogénés : (6) des résines hydrocarbonées aliphatiques dérivées du pétrole ayant un point de ramollissement par la méthode Bille et Anneau de 70°C à 135°C ; (7) des résines hydrocarbonées aromatiques dérivées du pétrole et leurs dérivés hydrogénés ; et (8) des résines hydrocarbonées alicycliques dérivées du pétrole et leurs dérivés hydrogénés.

3. Bloc de livre revêtu par le procédé suivant la revendication 1.

8